# EUROPEAN PATENT APPLICATION

(11) **EP 4 807 517 A1**
(43) Date of publication of application: **16.09.2026**
(21) Application number: 25186643.0
(22) Date of filing: 01.07.2025
(51) Int. Cl.: G06F 3/12, G06F 1/32, G06F 1/3231, H04N 1/00

(54) **POWER SAVING RECOVERY SYSTEM, PROGRAM, AND POWER SAVING RECOVERY METHOD**

(30) Priority: 10.03.2025 JP 2025037081
(71) Applicant: FUJIFILM Business Innovation Corp., Minato-ku Tokyo (JP)
(72) Inventor: KOIZUMI, Kenta, Yokohama-shi, Kanagawa (JP)
(74) Representative: Becker Kurig & Partner Patentanwälte mbB

(57) **Abstract**

A power saving recovery system includes: a processor configured to: return an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

## Description

### BACKGROUND OF THE INVENTION

### (i) Field of the Invention

The present invention relates to a power saving recovery system, a program, and a power saving recovery method.

### (ii) Description of Related Art

From the viewpoint of energy saving, a multifunction peripheral generally has a function of switching from a normal mode to a power saving mode to enter a power saving state when not used for a predetermined time. Thereafter, when a user performs an operation on an operation panel, the multifunction peripheral returns from the power saving state and the user can start using the multifunction peripheral. However, there are cases in which the user has to wait without being able to use the multifunction peripheral until the multifunction peripheral returns from the power saving state.

In recent years, there has been a multifunction peripheral that is equipped with a human presence sensor and has a function of returning the multifunction peripheral from a power saving state before starting to operate the multifunction peripheral when the human presence sensor detects the approach of a user.

### SUMMARY OF THE INVENTION

The human presence sensor can only detect the front side of the multifunction peripheral, and cannot detect the approach of a user from the side or rear side of the multifunction peripheral.

The present invention aims to enable an information processing apparatus to automatically return from a power saving state regardless of the direction from which a user approaches the information processing apparatus, in a case in which the information processing apparatus is automatically returned from a power saving state when the approach of the user is detected.

According to an aspect of the present invention, there is provided a power saving recovery system including: a processor configured to: return an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

The processor may be configured to: start detecting a signal strength of a received signal from the mobile terminal when the connection is established; and return the information processing apparatus from the power saving state in a case in which the detected signal strength satisfies a predetermined determination condition for determining that the user carrying the mobile terminal is approaching the information processing apparatus.

The determination condition may be a condition that the detected signal strength is equal to or greater than a predetermined threshold value.

The predetermined threshold value may be set according to a time required for the information processing apparatus to return from the power saving state.

The determination condition may be a condition that a state in which the detected signal strength is equal to or greater than the predetermined threshold value continues for a predetermined time or more.

In a case in which a state is detected in which the detected signal strength does not increase even though the detected signal strength is equal to or greater than the predetermined threshold value, the state may not be included in the determination condition.

The short-range wireless communication may be wireless communication using Wi-Fi Direct.

According to another aspect of the present invention, there is provided a program for causing a computer to realize: a function of returning an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

According to still another aspect of the present invention, there is provided a power saving recovery method including: returning an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

According to the first aspect of the present invention, in a case in which an information processing apparatus is automatically returned from a power saving state when the approach of a user is detected, the information processing apparatus can be automatically returned regardless of the direction from which the user approaches the information processing apparatus.

According to the second aspect of the present invention, the information processing apparatus can be returned from the power saving state only when a predetermined determination condition is satisfied.

According to the third aspect of the present invention, it is possible to determine that the user is approaching the information processing apparatus in a case in which the signal strength is equal to or greater than a predetermined threshold value.

According to the fourth aspect of the present invention, it is possible to reliably return the information processing apparatus from the power saving state when the user arrives at the information processing apparatus.

According to the fifth aspect of the present invention, in a case in which the user whose approach to the information processing apparatus has been once detected moves away from the information processing apparatus, the information processing apparatus does not need to be returned.

According to the sixth aspect of the present invention, in a case in which the user moves away from the information processing apparatus or stands still from a state of approaching the information processing apparatus, the information processing apparatus is not returned from the power saving state.

According to the seventh aspect of the present invention, it is possible to use Wi-Fi Direct.

According to the eighth aspect of the present invention, in a case in which an information processing apparatus is automatically returned from a power saving state when the approach of a user is detected, the information processing apparatus can be automatically returned regardless of the direction from which the user approaches the information processing apparatus.

According to the ninth aspect of the present invention, in a case in which an information processing apparatus is automatically returned from a power saving state when the approach of a user is detected, the information processing apparatus can be automatically returned regardless of the direction from which the user approaches the information processing apparatus.

### BRIEF DESCRIPTION OF THE DRAWINGS

Exemplary embodiment(s) of the present invention will be described in detail based on the following figures, wherein:
Fig. 1 is a block configuration diagram showing an example of a multifunction peripheral according to the present exemplary embodiment; and
Fig. 2 is a flowchart showing an automatic return process according to the present exemplary embodiment.

### DETAILED DESCRIPTION OF THE INVENTION

Hereinafter, exemplary embodiments of the present invention will be described with reference to the accompanying drawings.

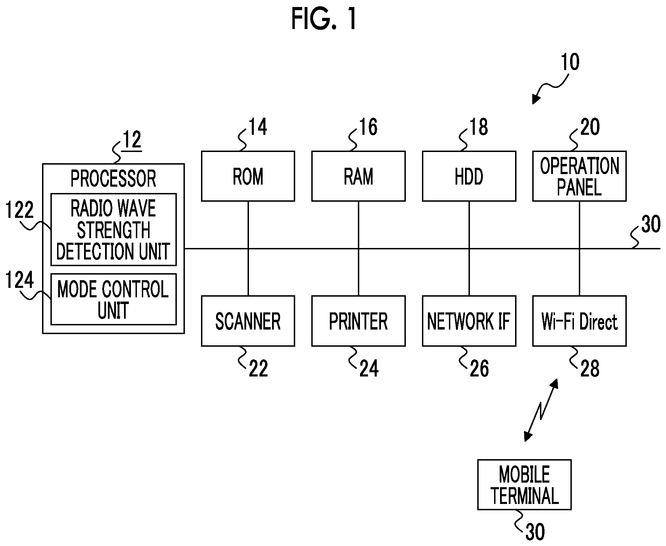

Fig. 1 is a block configuration diagram showing an example of a multifunction peripheral 10 according to the present exemplary embodiment. The multifunction peripheral 10 according to the present exemplary embodiment is an example of an image forming apparatus equipped with various functions such as a printing function, a copying function, and a scanner function. The multifunction peripheral 10 according to the present exemplary embodiment is also an example of an information processing apparatus equipped with a power saving recovery system according to the exemplary embodiment of the present invention. The multifunction peripheral 10 according to the present exemplary embodiment may basically be realized with a hardware configuration of a general multifunction peripheral. That is, the multifunction peripheral 10 includes a processor 12, a ROM 14, a RAM 16, a hard disk drive (HDD) 18 as storage means, an operation panel 20 as a user interface, a scanner 22, a printer 24, and a network interface (IF) 26 which is connected to a network and is used for data communication between external devices and for transmitting and receiving information via a browser. In addition, the multifunction peripheral 10 according to the present exemplary embodiment includes Wi-Fi Direct (registered trademark) 28.

The Wi-Fi Direct 28 is an example of short-range wireless communication means. Although the Wi-Fi Direct 28 varies depending on the specifications, the Wi-Fi Direct 28 is located within a range of several tens of meters and is wirelessly connected to a communication terminal device with a Wi-Fi Direct function. The Wi-Fi Direct 28 used in the present exemplary embodiment is omnidirectional and is therefore capable of wireless communication with communication terminal devices located in all directions, that is, 360 degrees. A mobile terminal 30 shown in FIG. 1 is an example of the communication terminal device, and is carried by the user of the multifunction peripheral 10.

The multifunction peripheral 10 has a radio wave strength detection unit 122 and a mode control unit 124, thereby realizing a power saving recovery system. The radio wave strength detection unit 122 and the mode control unit 124 are realized by the processor 12 and an application that operates on the processor 12.

The radio wave strength detection unit 122 detects a signal strength of a received signal from the mobile terminal 30 when the Wi-Fi Direct 28 wirelessly communicates with the mobile terminal 30. In the present exemplary embodiment, the signal strength of a received signal is referred to as a "radio wave strength". That is, the radio wave strength detection unit 122 detects the radio wave strength when the Wi-Fi Direct 28 wirelessly communicates with the mobile terminal 30. The multifunction peripheral 10 according to the present exemplary embodiment can be controlled to operate in at least two operation modes: a normal mode in which the multifunction peripheral 10 operates normally, and a power saving mode in which the multifunction peripheral 10 operates in a power saving state. The mode control unit 124 controls switching of the operation mode.

Next, the operation of the multifunction peripheral 10 according to the present exemplary embodiment will be described.

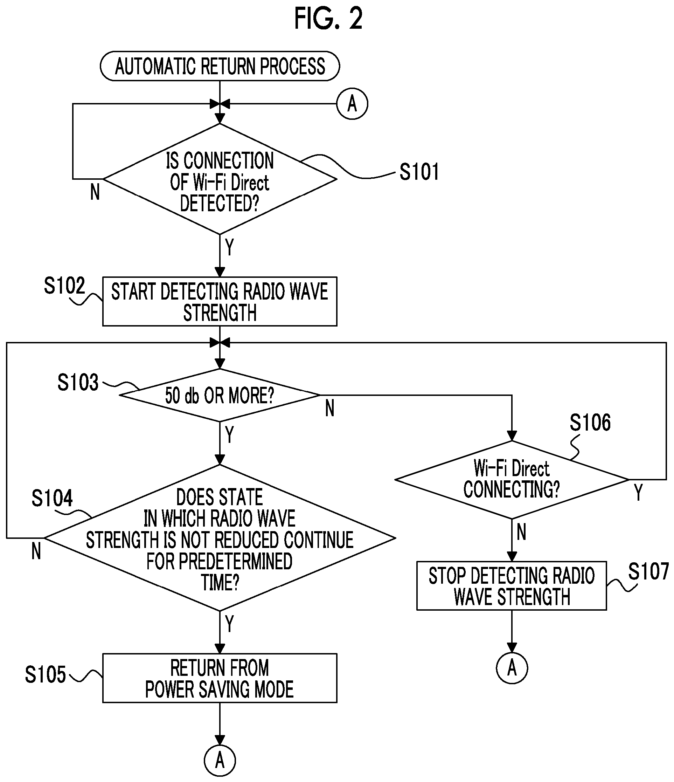

Under the control of the mode control unit 124, when the multifunction peripheral 10 is not used for a predetermined time, the multifunction peripheral 10 switches from the normal mode to the power saving mode and enters a power saving state. Thereafter, the multifunction peripheral 10 automatically returns from the power saving state in response to detecting the approach of a user. This automatic return process from the power saving state will be described with reference to the flowchart shown in FIG. 2.

First, as a premise of the present exemplary embodiment, it is assumed that a user who intends to use the multifunction peripheral 10 carries the mobile terminal 30 with him or her. This mobile terminal 30 is constantly capable of Wi-Fi Direct connection. In addition, since the mobile terminal 30 has a history of connection with the multifunction peripheral 10, it is assumed that, when a user carrying the mobile terminal 30 enters a range in which wireless communication is possible via the Wi-Fi Direct 28 on the multifunction peripheral 10, the mobile terminal 30 is automatically wirelessly connected to the Wi-Fi Direct 28.

The multifunction peripheral 10 is currently in a power saving state, but the Wi-Fi Direct 28 operates constantly even in the power saving state. The Wi-Fi Direct 28 does not detect the mobile terminal 30 until the user enters the range in which wireless communication is possible (N in step S101). Then, when the user enters the range in which wireless communication is possible with the multifunction peripheral 10, the Wi-Fi Direct 28 wirelessly connects the mobile terminal 30. When the establishment of the wireless connection is detected (Y in step S101), the radio wave strength detection unit 122 starts periodically detecting the radio wave strength (step S102). Although it is not advisable from the viewpoint of energy saving, the multifunction peripheral 10 may be configured to constantly detect radio wave strength regardless of whether or not there is a wireless connection via the Wi-Fi Direct 28.

**In** the present exemplary embodiment, in a case in which the signal strength detected by the radio wave strength detection unit 122 satisfies a predetermined determination condition for determining that a user carrying the mobile terminal 30 is approaching the multifunction peripheral 10, the multifunction peripheral 10 is automatically returned from the power saving state.

In the present exemplary embodiment, the radio wave strength is set to a threshold value of 50 db, and it is determined whether the radio wave strength is equal to or greater than this threshold value. In the present exemplary embodiment, one of the predetermined determination conditions is that when the radio wave strength reaches 50 db, it is determined that the distance from the Wi-Fi Direct 28 to the mobile terminal 30 is 10 m, that is, the user is approaching the multifunction peripheral 10 to a distance within 10 m.

In a case in which the radio wave strength is 50 db or more (Y in step S103), the mode control unit 124 determines whether a predetermined time has elapsed without reducing the radio wave strength. In a case in which the predetermined time has not elapsed (N in step S104), the process returns to step S103.

In the present exemplary embodiment, a state in which the radio wave strength is not further reduced is continued for a predetermined time as one of predetermined determination conditions. For example, when the radio wave strength increases further after the user approaches the multifunction peripheral 10 to within 10 m, this means that the user is further approaching the multifunction peripheral 10. In other words, in the present exemplary embodiment, one of the conditions is that the signal strength detected by the radio wave strength detection unit 122 is equal to or greater than a threshold value of 50 db, and that the radio wave strength is maintained at 50 db or greater without further weakening. When the radio wave strength does not increase even though the user has approached within 10 m of the multifunction peripheral 10, it is considered that the user is not taking any action to approach the multifunction peripheral 10, but is simply moving within a range of 10 m from the multifunction peripheral 10. Such cases are not included in the cases in which the determination conditions are satisfied. This eliminates the need to return the multifunction peripheral 10 from the power saving state in response to a user simply passing by within a range of 10 m from the multifunction peripheral 10.

In a case in which the state in which the radio wave strength is not reduced continues for a predetermined time, for example, 3 seconds (Y in step S104), the state can be inferred that the user continued to approach the multifunction peripheral 10 for 3 seconds. Therefore, assuming that the user intends to use the multifunction peripheral 10, the mode control unit 124 returns the multifunction peripheral 10 from the power saving state by switching the operation mode from the power saving mode to the normal mode when the aforementioned predetermined determination conditions are satisfied (step S105).

Note that, strictly speaking, the state in which the radio wave strength is not reduced includes a state in which the radio wave strength remains constant. For example, when the user moves in a circular motion with the multifunction peripheral 10 at the center, this state could logically occur, but in reality, it is considered unlikely that the user will move in this manner.

On the other hand, in a case in which the radio wave strength is less than 50 db (N in step S103) even though the Wi-Fi Direct 28 is wirelessly connected to the mobile terminal 30, the user is located more than 10 m away from the multifunction peripheral 10. Here, while the user is within the range of wireless communication available for the Wi-Fi Direct 28 (Y in step S106), the process returns to step S103 and the movements of the user are monitored. On the other hand, in a case in which the connection with the mobile terminal 30 that was once wirelessly connected is disconnected (N in step S106), it is determined that the user did not approach within 10 m of the multifunction peripheral 10 with the intention of using the multifunction peripheral 10, and the radio wave strength detection unit 122 stops detecting the radio wave strength (step S107). Then, the process returns to step S101.

According to the present exemplary embodiment, by using the non-directional wireless communication connection function of the Wi-Fi Direct 28 instead of a directional human presence sensor, the approach of a user can be detected regardless of the direction from which the user approaches the multifunction peripheral 10. Thus, according to the present exemplary embodiment, in response to establishment of a wireless connection with the Wi-Fi Direct 28, the multifunction peripheral 10 can be automatically returned from the power saving state when the user uses the multifunction peripheral 10.

In the present exemplary embodiment, by using the Wi-Fi Direct 28, it is possible to detect the approach of a user in a wider range than a human presence sensor, which generally has a detection range of the user of less than 180 degrees, for example, in all directions of 360 degrees. When the multifunction peripheral 10 is installed against a wall, it may not be possible to say that it can detect a 360-degree range, but it is possible to detect the approach of a user in a wider range than a human presence sensor.

Incidentally, in step S104, focusing on time, one of the predetermined determination conditions for returning from the power saving state is that a predetermined time, for example, 3 seconds, has elapsed since the user approached within 10 m. Of course, as in this example, the condition may be the passage of a preset time (3 seconds as described above). However, the time required for the multifunction peripheral 10 to return from the power saving state (hereinafter referred to as a "recovery time") depends on the model of the multifunction peripheral 10, that is, the performance and specifications. Therefore, instead of the fixed time length of 3 seconds as exemplified above, the predetermined time may be set with reference to the recovery time of the multifunction peripheral 10 equipped with the power saving recovery system according to the present exemplary embodiment.

For example, for convenience, it is assumed that a walking speed of the user is 1 m/sec. In other words, it takes 10 seconds to walk 10 m. Here, it is assumed that the recovery time for the multifunction peripheral 10 is 4 seconds. In this case, the predetermined time is set to (10-4) = 6 seconds. In other words, in step S104, when the user has not reduced the radio wave strength and 6 seconds have elapsed, this means that the user has moved from a position of 10 m away from the multifunction peripheral 10 to a position of 6 m away, that is, has approached to a position of 4 m from the multifunction peripheral 10. When the power saving mode is switched to the normal mode at this timing, the power saving state will be returned after 4 seconds. Since the user will reach the multifunction peripheral 10 at the point in time when 4 seconds have elapsed from the mode switch, the multifunction peripheral 10 will be returned from the power saving state when the user operates the multifunction peripheral 10.

In the present exemplary embodiment, as an example of the numerical values to be set, in addition to the predetermined time in step S104, a threshold value of 50 db is set as the radio wave strength in step S103. This 50 db is for determining the distance from the multifunction peripheral 10 as 10 m. Therefore, a radio wave strength other than 50 db may be set as the threshold value. This threshold value may be set taking into consideration the installation environment of the multifunction peripheral 10 and the performance of the Wi-Fi Direct 28.

Alternatively, similarly to the predetermined time in step S104 described above, the time may be set according to the recovery time. For example, when the recovery time is 4 seconds, an intended time, for example 8 seconds, is added to 4 seconds to obtain 12 seconds. Assuming that the user walks at 1 m/sec, similarly to the above, in step S103, the radio wave strength when the distance from the multifunction peripheral 10 is 12 m is used as the threshold value.

As described above, in the present exemplary embodiment, the Wi-Fi Direct 28 is used to detect the approach of a user. However, when a short-range wireless communication means capable of omnidirectional communication is used, it is not necessarily necessary to use the Wi-Fi Direct 28. For example, Bluetooth (registered trademark) or Bluetooth Low Energy (BLE) may be used. Of course, the mobile terminal 30 needs to be equipped with a function that allows wireless connection with the short-range wireless communication means mounted in the multifunction peripheral 10.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present invention is also applicable to programs and program products.

### (Supplementary Notes)

(((1))) A power saving recovery system comprising:
   a processor configured to:
   return an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.
(((2))) The power saving recovery system according to (((1))), wherein the processor is configured to:
   start detecting a signal strength of a received signal from the mobile terminal when the connection is established; and
   return the information processing apparatus from the power saving state in a case in which the detected signal strength satisfies a predetermined determination condition for determining that the user carrying the mobile terminal is approaching the information processing apparatus.
(((3))) The power saving recovery system according to (((2))),
   wherein the determination condition is a condition that the detected signal strength is equal to or greater than a predetermined threshold value.
(((4))) The power saving recovery system according to (((3))),
   wherein the predetermined threshold value is set according to a time required for the information processing apparatus to return from the power saving state.
(((5))) The power saving recovery system according to (((3))),
   wherein the determination condition is a condition that a state in which the detected signal strength is equal to or greater than the predetermined threshold value continues for a predetermined time or more.
(((6))) The power saving recovery system according to (((3))),
   wherein, in a case in which a state is detected in which the detected signal strength does not increase even though the detected signal strength is equal to or greater than the predetermined threshold value, the state is not included in the determination condition.
(((7))) The power saving recovery system according to any one of (((1))) to (((6))),
   wherein the short-range wireless communication is wireless communication using Wi-Fi Direct.
(((8))) A program for causing a computer to realize:
   a function of returning an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

According to (((1))), in a case in which an information processing apparatus is automatically returned from a power saving state when the approach of a user is detected, the information processing apparatus can be automatically returned regardless of the direction from which the user approaches the information processing apparatus.

According to (((2))), the information processing apparatus can be returned from the power saving state only when a predetermined determination condition is satisfied.

According to (((3))), it is possible to determine that the user is approaching the information processing apparatus in a case in which the signal strength is equal to or greater than a predetermined threshold value.

According to (((4))), it is possible to reliably return the information processing apparatus from the power saving state when the user arrives at the information processing apparatus.

According to (((5))), in a case in which the user whose approach to the information processing apparatus has been once detected moves away from the information processing apparatus, the information processing apparatus does not need to be returned.

According to (((6))), in a case in which the user moves away from the information processing apparatus or stands still from a state of approaching the information processing apparatus, the information processing apparatus is not returned from the power saving state.

According to (((7))), it is possible to use Wi-Fi Direct.

According to (((8))), in a case in which an information processing apparatus is automatically returned from a power saving state when the approach of a user is detected, the information processing apparatus can be automatically returned regardless of the direction from which the user approaches the information processing apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: multifunction peripheral
12: processor
14: ROM
16: RAM
18: hard disk drive (HDD)
20: operation panel
22: scanner
24: printer
26: network interface (IF)
28: Wi-Fi Direct
30: mobile terminal
122: radio wave strength detection unit
124: mode control unit

## Claims

1. A power saving recovery system comprising:
a processor configured to:
return an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

2. The power saving recovery system according to claim 1, wherein the processor is configured to:
start detecting a signal strength of a received signal from the mobile terminal when the connection is established; and
return the information processing apparatus from the power saving state in a case in which the detected signal strength satisfies a predetermined determination condition for determining that the user carrying the mobile terminal is approaching the information processing apparatus.

3. The power saving recovery system according to claim 2,
wherein the determination condition is a condition that the detected signal strength is equal to or greater than a predetermined threshold value.

4. The power saving recovery system according to claim 3,
wherein the predetermined threshold value is set according to a time required for the information processing apparatus to return from the power saving state.

5. The power saving recovery system according to claim 3,
wherein the determination condition is a condition that a state in which the detected signal strength is equal to or greater than the predetermined threshold value continues for a predetermined time or more.

6. The power saving recovery system according to claim 3,
wherein, in a case in which a state is detected in which the detected signal strength does not increase even though the detected signal strength is equal to or greater than the predetermined threshold value, the state is not included in the determination condition.

7. The power saving recovery system according to any one of claims 1 to 6,
wherein the short-range wireless communication is wireless communication using Wi-Fi Direct.

8. A program for causing a computer to realize:
a function of returning an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.

9. A power saving recovery method comprising:
returning an information processing apparatus from a power saving state in response to establishment of a connection via short-range wireless communication between the information processing apparatus and a mobile terminal carried by a user, the mobile terminal having a history of connection via short-range wireless communication when the information processing apparatus is in the power saving state.
